(19) **Europäisches Patentamt / European Patent Office / Office européen des brevets**

(11) **EP 4 686 708 A1**

(12) **DEMANDE DE BREVET EUROPEEN**

(43) Date de publication:
04.02.2026 Bulletin 2026/06

(21) Numéro de dépôt: 25193055.8

(22) Date de dépôt: 31.07.2025

(51) Classification Internationale des Brevets (IPC):
*C03C 3/14* (2006.01)    *C03C 12/00* (2006.01)
*C03C 14/00* (2006.01)    *H01M 4/00* (2006.01)

(52) Classification Coopérative des Brevets (CPC):
**C03C 3/14; C03C 12/00; C03C 14/006;
H01M 4/483; H01M 10/0525; H01M 10/054;**
H01M 4/502; H01M 4/625

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: 01.08.2024 FR 2408554

(71) Demandeur: **Commissariat à l'Energie Atomique et aux Energies Alternatives
75015 Paris (FR)**

(72) Inventeurs:
• **DELANOE, Alexis
38054 GRENOBLE (FR)**

• **CARDOSO, Alexi
63000 CLERMONT-FERRAND (FR)**
• **AGULLO, Julia
30320 Marguerittes (FR)**
• **MARTINET, Sébastien
38054 GRENOBLE (FR)**
• **GUYOT, Taos
38054 GRENOBLE (FR)**
• **PERRET, Damien
30290 Laudun (FR)**
• **SIMONIN, Loïc
38054 GRENOBLE (FR)**

(74) Mandataire: **Gevers & Orès
Immeuble le Palatin 2
3 Cours du Triangle
CS 80165
92939 Paris La Défense Cedex (FR)**

(54) **VERRES TERNAIRES DE BORATE DE MANGANESE SODIES, LEUR PROCEDE D'OBTENTION, ET LEURS UTILISATIONS EN TANT QUE MATERIAUX ACTIFS D ELECTRODES POSITIVES**

(57) La présente invention concerne des verres ternaires de borate de manganèse sodiés, ainsi que leur procédé d'obtention. L'invention vise également la préparation et l'utilisation desdits verres en tant que matériaux actifs d'électrodes positives, en particulier d'accumulateurs métal-ion, ainsi que lesdits matériaux actifs et électrodes *per se.*

**EP 4 686 708 A1**

## Description

La présente invention concerne des verres ternaires de borate de manganèse sodiés, ainsi que leur procédé d'obtention. L'invention vise également la préparation et l'utilisation desdits verres en tant que matériaux actifs d'électrodes positives, en particulier d'accumulateurs métal-ion, ainsi que lesdits matériaux actifs et électrodes *per se*.

Le $LiCoO_2$ (LCO) constitue la technologie de l'électrode positive du premier accumulateur lithium-ion commercialisé par Sony en 1991. Cette technologie présente une très forte densité d'énergie et une mise en œuvre relativement aisée. Néanmoins, l'instabilité liée à l'exploitation du dioxyde de cobalt ($CoO_2$) rend cette technologie peu sûre d'un point de vue industriel et les spéculations autour des prix du cobalt augmentent son prix.

Parmi les autres différentes technologies bien établies d'électrode positive de batterie Li-ion, le $LiFePO_4$ (LFP) est une technologie connue pour ses très bonnes caractéristiques en puissance et en cyclage, tout en présentant le grand avantage d'avoir une grande sécurité intrinsèque et d'avoir une très bonne durée de vie, que ce soit calendaire ou en cyclage.

Cependant, la capacité théorique de $LiFePO_4$ (170 mAh/g) associée à une tension moyenne de fonctionnement de 3,2V est un obstacle à son application dans les batteries nécessitant des densités d'énergie élevées. Cette contrainte est illustrée par l'autonomie limitée des véhicules électriques (inférieure à 160 km) équipés d'une telle technologie, ce qui limite leur introduction à grande échelle.

Pour augmenter les densités d'énergie, il est généralement nécessaire de développer de nouveaux matériaux cathodiques au-delà du LFP et du LCO qui sont capables d'échanger plus d'un Li par métal de transition.

L'élaboration d'électrodes positives à base de verre est une voie intéressante, notamment car le procédé de synthèse des verres reste plus facile à mettre en œuvre que pour d'autres voies de synthèse (comme par synthèse hydrothermal par exemple). Également, elle est aisément modulable pour la synthèse de matériau à de grande échelle. De plus, le réseau vitreux formant la structure des verres est moins rigide et constitué d'une fraction de volume libre (espace vacant) plus importante que pour leurs homologues cristallisés. Théoriquement cela permettrait donc aux verres d'incorporer et d'extraire les ions alcalins de façon aisée ainsi que d'accepter plus facilement les modifications structurales pouvant survenir lors du cyclage. En raison des nombreux états d'oxydation accessibles du vanadium, les électrodes de verre à base de vanadate ont été considérées comme des alternatives intéressantes. Actuellement dans la littérature, les meilleures performances électrochimiques pour un verre à base de vanadium sont détenues par un matériau basé sur le système $Li_2O$ - $B_2O_3$ - $V_2O_5$ permettant d'atteindre les 1000 Wh/kg à l'échelle du matériau actif sur 10 cycles.

Toutefois, ce matériau reste limité par un potentiel de fonctionnement assez bas (2,4 V vs $Li^+$/Li) et surtout par sa première charge extrêmement faible (20 mAh/g).

En outre, le vanadium pose des problématiques de toxicité et de coût limitant son application pérenne dans le secteur de la mobilité électrique ou du stockage stationnaire notamment.

Un objectif de l'invention est ainsi de fournir des composés qui ne présentent pas les inconvénients précités.

En particulier, un objectif de l'invention est de fournir des composés susceptibles d'être utilisés avec succès pour la préparation d'électrodes positives, en particulier d'accumulateurs métal-ion (le métal étant en particulier un métal alcalin ou alcalino-terreux, par exemple Li, Na, K, Mg ou Ca), ayant des capacités élevées et/ou des hautes densités d'énergie, notamment plus élevées que celles relatives aux dispositifs de l'art antérieur, tout en s'affranchissant de métaux critiques d'un point de vue économique et/ou toxiques, comme le cobalt ou le vanadium.

Aussi, l'invention concerne un verre de formule (I) suivante :

$$x\ Na_2O - y\ MnO_z - (100\text{-}x\text{-}y)\ B_2O_3 \qquad (I),$$

avec :

$$0 < x < 100$$

$$5 \leq y < 100$$

$$5 < x+y < 100$$

$$1 \leq z \leq 2.$$

Par « verre », on entend notamment un composé solide métastable, amorphe ou substantiellement amorphe.

Par « amorphe », on entend notamment un composé solide ne présentant aucune structure atomique ordonnée à moyenne et longue distance.

Par « substantiellement amorphe », on entend notamment que le composé est à plus de 97%, en particulier à plus de 98 ou 99% amorphe en masse.

Le caractère amorphe peut être déterminé par toute technique bien connue de l'homme du métier, en particulier par diffraction des rayons (DRX).

Selon un mode de réalisation particulier, z est égal à 1.

Selon un mode de réalisation particulier, z est égal à 2.

Selon un mode de réalisation particulier, z est supérieur à 1 et inférieur à 2.

Selon un mode de réalisation particulier, x est supérieur ou égal à 1, 2, 3, 4, 5, 6, 7, 8, 9, 10, 11, 12 ou 13.

Selon un mode de réalisation particulier, x est supérieur ou égal à 1, 5, 10, 15, 20, 25, 30, 40 ou 45.

Selon un mode de réalisation particulier, y est supérieur ou égal à 6, 7, 8, 9, 10, 15, 20 ou 25, en particulier 25.

Selon un mode de réalisation particulier, y est supérieur ou égal à 6, 10, 15, 20, 25, 30, 35, 40 ou 45.

Selon un mode de réalisation particulier, 6 < x+y < 100, avec en particulier 8, 10, 15, 20, 25, 30, 35 ou 38 < x+y < 100.

Selon un mode de réalisation particulier, 30, 35, 40, 45, 50, 55, 60, 65, 70, 75, 80, 85 ou 90< x+y < 100.

Selon un mode de réalisation particulier, x <95, voire 90, 80, 70, 60, 50 ou 45.

Selon un mode de réalisation particulier, y <95, voire 90, 80, 70, 60, 50 ou 45 ou 40.

Selon un mode de réalisation particulier, y <95, voire 90, 80, 70, 60, 50 ou 45 ou 40, et y est supérieur ou égal à 25.

Selon un mode de réalisation particulier, x <95, voire 90, 80, 70 ou 60, et y <95, voire 90, 80, 70 ou 60.

Selon un mode de réalisation particulier, x+y < 95, voire 90, 80, 70, 60, 55 ou 50, avec en particulier x+y < 80.

Selon un mode de réalisation particulier, 30 < x+y < 60, voire 35 < x+y < 55.

Selon un mode de réalisation particulier, 30 < x+y < 60, voire 35 < x+y < 55, et y est en particulier supérieur ou égal à 25, avec par exemple y <50 ou 45 ou 40 ou 35.

Selon un mode de réalisation particulier, $0,25 \leq x/y \leq 2$, et plus particulièrement $0,25 \leq x/y \leq 1$, par exemple environ 0,5.

Selon un mode de réalisation particulier, l'invention concerne un verre tel que défini précédemment, dont la formule est la suivante :

- 14 $Na_2O$ - 29 $MnO_z$ - 57 $B_2O_3$, dans laquelle z est tel que défini précédemment, z étant notamment égal à 2.

Pour toute formule (I) particulière donnée, chaque valeur de x et de y s'entend à $\pm$ 0,5 % près, voire $\pm$ 1 % ou $\pm$ 2 % ou $\pm$ 3 % ou $\pm$ 4 % ou $\pm$ 5 % ou $\pm$ 10 % près. Ainsi, à titre d'exemple, une valeur de x ou y de 60 $\pm$ 1 %, comprend les valeurs de 59,4 à 60,6.

Selon un autre aspect, l'invention concerne également un procédé de préparation d'un verre de formule (I) tel que défini précédemment, comprenant ou constitué d'une étape (i) de trempe d'un mélange (A) en fusion, lequel est constitué de ou comprend une source de $Na_2O$, une source de $MnO_z$ et une source de $B_2O_3$, pour obtenir ledit verre.

Par « source de $Na_2O$, de $MnO_z$ ou de $B_2O_3$ », on entend notamment tout précurseur de $Na_2O$, de $MnO_z$ ou de $B_2O_3$ respectivement, c'est-à-dire en particulier tout composé ou toute composition apte à générer $Na_2O$, $MnO_z$ ou $B_2O_3$ respectivement, dans les conditions décrites dans le présent texte. Il peut par exemple s'agir de toute composition comprenant $Na_2O$, (Mn, MnO et/ou $MnO_2$), ou $B_2O_3$ respectivement.

Tous les modes de réalisation décrits précédemment relativement au verre de l'invention s'appliquent également ici, seuls ou en combinaison.

Selon un mode de réalisation particulier, la trempe peut être effectuée par coulée sur plaque, par exemple métallique, ou être accélérée par l'application de contraintes mécanique, par exemple par marteau pilon.

Selon un mode de réalisation particulier, le procédé tel que défini précédemment comprend :

- une étape (i) de trempe d'un mélange en fusion (A), lequel est constitué de ou comprend une source de $Na_2O$, une source de $MnO_z$ et une source de $B_2O_3$, pour obtenir un verre intermédiaire ;
- une étape (ii) de concassage du verre intermédiaire obtenu à l'issue de l'étape (i) ;
- une étape (iii) de trempe du verre intermédiaire concassé obtenu à l'issue de l'étape (ii), préalablement en fusion, pour obtenir le verre tel que défini précédemment.

Selon un mode de réalisation particulier, le mélange en fusion de l'étape (i) tel que décrit précédemment est, préalablement à la trempe, à une température $T_b$ comprise de 700°C à 1500, par exemple d'environ 900°C.

La température $T_b$ est par exemple maintenue pendant 1 heure environ.

Selon un mode de réalisation particulier, le mélange en fusion de l'étape (iii) tel que décrit précédemment, est, préalablement à la trempe, à une température $T_b'$ comprise de 700°C à 1500, par exemple d'environ 950°C.

La température $T_b'$ est par exemple maintenue pendant 1 heure environ.

Par « trempe », on entend notamment un passage de la température $T_b$ ou $T_b'$ à une température plus basse, en particulier la température ambiante, à une vitesse supérieure ou égale à environ 1000°C/min pour une trempe coulée sur plaque et supérieure ou égale à environ 10000°C/min pour une trempe de type marteau pilon.

Selon un mode de réalisation particulier, l'étape (i) telle que décrite précédemment, est précédée d'une étape de montée en température du mélange de poudres de précurseurs, jusqu'à la température $T_a$ puis d'une seconde montée en température jusqu'à la température $T_b$. La température $T_a$ est par exemple d'environ 800°C, en particulier avec une montée en température d'environ 300°C/h.

La température $T_a$ est par exemple maintenue pendant 1 heure environ.

La montée en température jusqu'à la température $T_b$ se fait notamment à une vitesse de chauffe d'environ 300°C/h. La température $T_b$ est par exemple d'environ 900°C.

Selon un mode de réalisation particulier, le mélange en fusion de l'étape (iii) tel que décrit précédemment, est obtenu en introduisant le verre intermédiaire concassé de l'étape (ii), tel que décrit précédemment, directement à une température $T_b$' comprise de 700°C à 1500, par exemple d'environ 950°C.

Selon un mode de réalisation particulier, l'étape (i) telle que décrite précédemment est précédée d'une étape d'agitation du mélange (A).

En particulier, cette agitation est effectuée sur le mélange (A) avant sa fusion, et optionnellement sur le mélange (A) en fusion, avant l'étape (i) de trempe.

Selon un mode de réalisation particulier, le procédé selon l'invention, tel que défini précédemment, comprend :

- Une étape $(i_0)$ de montée en température d'un mélange de précurseurs (A) constitué d'une source de $Na_2O$, une source de $MnO_z$ et une source de $B_2O_3$. Ce mélange est amené à la température $T_a$ puis à l'aide d'une seconde montée en température jusqu'à la température $T_b$, afin d'obtenir un mélange (A) en fusion. La température $T_a$ est d'environ 800°C, en particulier avec une montée en température d'environ 300°C/h. La montée en température jusqu'à la température $T_b$ se fait notamment à une vitesse de chauffe d'environ 300°C/h. La température $T_b$ est par exemple d'environ 900°C.

- une étape (i) de trempe du mélange en fusion (A) tel qu'obtenu à l'étape précédente, pour obtenir ledit verre.

Selon un mode de réalisation particulier, le procédé selon l'invention, tel que défini précédemment, comprend :

- Une étape $(i_0)$ de montée en température d'un mélange de précurseurs (A) constitué d'une source de $Na_2O$, une source de $MnO_z$ et une source de $B_2O_3$. Ce mélange est amené à la température $T_a$ puis à l'aide d'une seconde montée en température jusqu'à la température $T_b$, afin d'obtenir un mélange (A) en fusion. La température $T_a$ est par exemple d'environ 800°C, en particulier avec une montée en température d'environ 300°C/h. La montée en température jusqu'à la température $T_b$ se fait notamment à une vitesse de chauffe d'environ 300°C/h. La température $T_b$ est par exemple d'environ 900°C.
- une étape (i) de trempe du mélange en fusion (A) tel qu'obtenu à l'étape précédente, pour obtenir un verre intermédiaire ;
- une étape (ii) de concassage du verre intermédiaire obtenu à l'issue de l'étape (i) ;
- une étape $(iii_0)$ d'introduction du verre intermédiaire concassé à une température $T_b$', la température $T_b$' étant comprise de 700°C à 1500°C, par exemple d'environ 900 ou 950°C;
- une étape (iii) de trempe du verre intermédiaire concassé en fusion obtenu à l'issue de l'étape $(iii_0)$, pour obtenir le verre tel que défini précédemment.

Selon un mode de réalisation particulier, le procédé selon l'invention, tel que défini précédemment, comprend :

- Une étape $(i_0)$ de montée en température, sous agitation, d'un mélange de précurseurs (A) constitué d'une source de $Na_2O$, une source de $MnO_z$ et une source de $B_2O_3$. Ce mélange est amené à la température $T_a$ puis à l'aide d'une seconde montée en température jusqu'à la température $T_b$, afin d'obtenir un mélange (A) en fusion. La température $T_a$ est par exemple d'environ 800°C, en particulier avec une montée en température d'environ 300°C/h. La montée en température jusqu'à la température $T_b$ se fait notamment à une vitesse de chauffe d'environ 300°C/h. La température $T_b$ est par exemple d'environ 900°C ;
- une étape (i) de trempe du mélange en fusion (A) tel qu'obtenu à l'étape précédente, pour obtenir ledit verre.

Selon un mode de réalisation particulier, l'agitation au cours de l'étape $(i_0)$ est une agitation mécanique, en particulier par une pale d'agitation.

Selon un mode de réalisation particulier, la source de $Na_2O$ comprend ou est constitué de $Na_2CO_3$, $NaPO_3$, $Na(OH)$ et/ou $NaNO_3$, notamment $Na_2CO_3$.

Selon un mode de réalisation particulier, la source de $MnO_z$ comprend ou est constitué de $MnO$ et/ou $MnO_2$, $Mn_2O_3$, $Mn(CO_3)$, $Mn(SO_4)$, ou $Mn(OH)_2$, notamment $MnO$ et/ou $MnO_2$.

Lorsque z est égal à 1, en particulier, la source de $MnO_z$ comprend ou est constitué de MnO..

Lorsque z est égal à 2, en particulier, la source de $MnO_z$ comprend ou est constitué de $MnO_2$..

Lorsque z est supérieur à 1 et inférieur à 2, en particulier, la source de $MnO_z$ comprend ou est constitué de MnO et de $MnO_2$. Les proportions de MnO et de $MnO_2$ peuvent aisément être déterminées selon la valeur de z.

Selon un mode de réalisation particulier, la source de $B_2O_3$ comprend ou est constitué de $H_3BO_3$.

Selon un autre aspect, l'invention concerne également un verre susceptible d'être obtenu selon l'un des procédés définis précédemment.

Selon un autre aspect, l'invention concerne également une poudre constituée de ou comprenant des particules de verre tel que défini précédemment.

Selon un mode de réalisation particulier, les particules ont une taille comprise de 0,1 à 100 $\mu$m, en particulier de 0,1 à 50 $\mu$m, notamment de 1 à 50 $\mu$m.

Selon un mode de réalisation plus particulier, les particules ont une taille comprise de 0,1 à 5 voire 2 $\mu$m.

Tous les modes de réalisation décrits précédemment relativement au verre de l'invention s'appliquent également ici, seuls ou en combinaison.

Selon un mode de réalisation particulier, la poudre telle que définie précédemment est dépourvue de KBr.

Selon un mode de réalisation particulier, les particules ont une taille comprise de 0,1 à 100 $\mu$m, en particulier de 50 à 100 $\mu$m, ou de 0,1 à 50 $\mu$m, notamment de 1 à 50 $\mu$m.

Selon un mode de réalisation plus particulier, les particules ont une taille comprise de 0,1 à 5 voire 2 $\mu$m.

Par « taille », on entend en particulier la plus grande dimension d'une particule.

Cette taille est en particulier une taille moyenne déterminé par granulométrie laser.

Selon un autre aspect, l'invention concerne également une poudre constituée de ou comprenant des particules de verre tel que défini précédemment et un additif conducteur électronique.

L'additif conducteur électronique, bien connu de l'homme du métier, peut être constitué de ou comprendre du carbone dur et/ou du graphite, ou de tout autre additif conducteur.

Selon un autre aspect, l'invention concerne également une poudre constituée de ou comprenant des particules de verre tel que défini précédemment et un additif conducteur électronique, en particulier des particules de carbone.

Tous les modes de réalisation décrits précédemment relativement au verre et/ou aux particules de verre de l'invention s'appliquent également ici, seuls ou en combinaison.

Selon un mode de réalisation particulier, les particules ont une taille comprise de 0,1 à 100 $\mu$m, en particulier de 0,1 à 50 $\mu$m, notamment de 1 à 50 $\mu$m.

Selon un mode de réalisation plus particulier, les particules ont une taille comprise de 0,1 à 5 $\mu$m.

Par « particules de carbone », on entend des particules constituant du noir de carbone.

Par « noir de carbone », on entend notamment une composition pulvérulente de carbone sous forme amorphe, laquelle est en particulier sous la forme d'une poudre constituée de ou comprenant des particules sphériques ou sphéroïdes de 5 à 500 nm (plus grande dimension), notamment inférieures à 100 nm.

Selon un mode de réalisation particulier, les particules de verre sont mélangées à un additif conducteur électronique, en particulier des particules de carbone constituant alors un matériau composite. Dans ce composite, les particules d'additif, en particulier de carbone, sont distribuées de telle sorte qu'elles enveloppent les particules de verre.

Selon un mode de réalisation particulier, le rapport de la masse des particules de verre sur la masse d'additif conducteur électronique, en particulier des particules de carbone est compris de 90/5 ou 80/10 à 50/40, ce rapport étant par exemple de 70/25.

Selon un autre mode de réalisation particulier, le rapport de la masse des particules de verre sur la masse d'additif conducteur électronique, en particulier des particules de carbone est compris de 96/2 à 90/5.

Selon un autre aspect, l'invention concerne également une poudre constituée de ou comprenant des particules de verre tel que défini précédemment, un additif conducteur électronique, en particulier des particules de carbone, et un liant.

Tous les modes de réalisation décrits précédemment relativement au verre et/ou aux particules de verre de l'invention s'appliquent également ici, seuls ou en combinaison.

Selon un mode de réalisation particulier, le liant est un polymère, notamment choisi parmi polyfluorure de vinylidène (PVDF).

Selon un mode de réalisation particulier, la poudre telle que définie précédemment, comprend, en masse :

- de 50 à 80% de particules de verre tel que défini précédemment, en particulier 70% ;
- de 10 à 40% de particules de carbone, en particulier 25% ; et
- de 5 à 10% de liant, en particulier 5%.

Selon un mode de réalisation particulier, la poudre telle que définie précédemment, comprend, en masse :

- de 90 à 96% de particules de verre tel que défini précédemment ;
- de 2 à 6% de particules de carbone, en particulier ; et
- de 2 à 4% de liant.

Selon un autre aspect, l'invention concerne également un procédé de préparation d'une poudre tel que définie précédemment, comprenant une étape a) de broyage d'un verre tel que défini précédemment.

Tous les modes de réalisation décrits précédemment relativement au verre et/ou aux particules de verre, et/ou à une poudre de l'invention s'appliquent également ici, seuls ou en combinaison.

Selon un mode de réalisation particulier, le procédé de l'invention tel que défini précédemment comprend :

a) une première étape de broyage, en particulier à billes, d'un verre tel que défini précédemment, pour obtenir une première poudre de verre ;

b) une deuxième étape de broyage, en particulier à billes, d'une composition comprenant la poudre de verre obtenue à l'issue de l'épate précédente, ainsi qu'une poudre d'additif conducteur électronique, en particulier de carbone.

Selon un mode de réalisation plus particulier, les particules de la première poudre de verre ont une taille comprise de 5 voire 10 à 20 $\mu$m.

Le broyage selon une étape a) telle que décrite précédemment peut notamment être réalisé à l'aide d'un vibro-broyeur, en particulier en voie sèche, ou d'un attriteur (broyage par érosion). Dans le cas d'un vibro-broyeur, le verre est typiquement placé dans une cuve de broyage contenant une ou plusieurs billes de broyage. Par le biais d'oscillations de la cuve de broyage à l'horizontal, le matériau est broyé par impacts entre les billes de broyage, la cuve et le matériau à broyer.

Le broyage à billes selon une étape b) telle que décrite précédemment peut notamment être réalisé à l'aide d'un broyeur planétaire, ou d'un broyeur centrifuge.

Selon un autre aspect, l'invention concerne également l'utilisation d'un verre tel que défini précédemment ou d'une poudre telle que définie précédemment pour la réalisation d'une électrode, en particulier positive, notamment pour un accumulateur métal-ion.

Tous les modes de réalisation décrits précédemment relativement au verre et/ou aux particules de verre, et/ou à une poudre de l'invention s'appliquent également ici, seuls ou en combinaison.

Selon un autre aspect, l'invention concerne également un procédé de préparation d'une électrode, en particulier positive, notamment pour une pile ou un accumulateur métal-ion, ledit procédé comprenant une étape A) de mise en contact d'une poudre constituée de ou comprenant des particules de verre, un additif conducteur électronique, en particulier des particules de carbone, et optionnellement un liant, tel que définie précédemment, avec un support conducteur.

Tous les modes de réalisation décrits précédemment relativement au verre et/ou aux particules de verre, et/ou à une poudre de l'invention s'appliquent également ici, seuls ou en combinaison.

Selon un mode de réalisation particulier, le support conducteur est un support métallique, le métal étant l'aluminium (Al) et le cuivre (Cu).

Selon un mode de réalisation particulier, le procédé de l'invention tel que défini précédemment comprend :

$A_0$) une étape de préparation d'une encre par ajout d'un solvant, notamment choisi parmi la N-méthyl-2-pyrrolidone (NMP), ou des polymères en base aqueuse (comme par exemple la carboxyméthylcellulose), à une poudre constituée de ou comprenant des particules de verre, un additif conducteur électronique, en particulier des particules de carbone et optionnellement un liant, le liant étant par exemple dissous au préalable dans un solvant, notamment la N-méthyl-2-pyrrolidone (NMP), telle que définie précédemment, et, optionnellement homogénéisation, en particulier par agitation mécanique, pour obtenir une suspension ;

A) une étape A) de mise en contact d'une suspension telle qu'obtenue à l'issue de l'étape $A_0$), avec un support conducteur, notamment par enduction, par exemple de type « doctor blade » pour obtenir un dispositif ;

B) optionnellement, une étape de séchage dudit dispositif ;

C) optionnellement une étape de mise en forme, notamment par pastillage, dudit dispositif, éventuellement séché, notamment à une température comprise de 50 à 100°C, en particulier à environ 80°C, et/ou pendant 1 à 48 heures, par exemple pendant environ 24 heures.

Selon un autre aspect, l'invention concerne également une pile ou un accumulateur comprenant une électrode, en particulier positive, comprenant un verre tel que défini précédemment ou une poudre telle que définie précédemment.

Tous les modes de réalisation décrits précédemment relativement au verre et/ou aux particules de verre, et/ou à une poudre de l'invention s'appliquent également ici, seuls ou en combinaison.

Selon un mode de réalisation particulier, la pile ou l'accumulateur tel que défini précédemment comprend en outre au moins un électrolyte, un séparateur, en particulier microporeux, et une électrode négative, en particulier étant constituée de ou comprenant un métal choisi parmi Li, Na et K.

Ces éléments sont bien connus de l'homme du métier, qui pourra les sélectionner, notamment parmi les éléments du commerce, selon les besoins.

L'électrode négative peut également être constituée de ou comprenant du carbone dur ou du graphite.

Selon un mode de réalisation particulier, la pile ou l'accumulateur tel que défini précédemment possède une capacité spécifique théorique supérieure à 80 mAh/g et allant par exemple jusqu'à ou dépassant 225,5 mAh/g environ, voire 264,7 mAh/g environ.

Les piles et les accumulateurs de l'invention peuvent par exemple être utilisées dans le domaine du stockage électrique, notamment stationnaire, ou en mobilité électrique, notamment pour de l'électronique portable ou mettable, en intégration dans des fibres et/ou des câbles, en particulier dans le cadre de batteries filaires, ou pour un usage médical.

En particulier, les piles et les accumulateurs de l'invention peuvent être utilisées dans le domaine de la mobilité électrique, notamment pour véhicules électriques, véhicules électriques hybrides rechargeables, véhicules hybrides, ou 2 roues électriques.

En particulier, les piles et les accumulateurs de l'invention peuvent être utilisées dans le domaine de l'électroportatif, notamment téléphonie, ordinateurs portables, ou outillage portatif.

Selon un autre aspect, l'invention concerne également une batterie comprenant au moins une pile ou au moins un accumulateur tel que défini précédemment.

Tous les modes de réalisation décrits précédemment relativement au verre et/ou aux particules de verre, et/ou à une poudre de l'invention, et/ou à une électrode, et/ou à une pile ou un accumulateur s'appliquent également ici, seuls ou en combinaison.

Selon un autre aspect, l'invention concerne également un système électroportatif ou adapté à la mobilité électrique, comprenant une batterie telle que défini précédemment.

Tous les modes de réalisation décrits précédemment relativement au verre et/ou aux particules de verre, et/ou à une poudre de l'invention, et/ou à une électrode, et/ou à une pile ou un accumulateur s'appliquent également ici, seuls ou en combinaison.

## DEFINITIONS

Tel qu'on l'entend ici, les plages de valeur sous forme de « a-b » ou « de a à b » ou « entre a et b » incluent les bornes a et b, les entiers compris entre ces bornes, ainsi que tous les autres nombres réels compris entre ces bornes. A titre d'exemple, « 1-5 », ou « de 1 à 5 » ou « entre 1 et 5 » désignent les entiers 1, 2, 3, 4 et 5, ainsi que tous les autres nombres réels compris entre 1 et 5. Les modes de réalisations préférés incluent chaque entier pris individuellement dans la plage de valeur, ainsi que toute sous-combinaison de ces entiers et tout ensemble de nombres réels compris entre ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de $\pm$ 10 % d'une valeur spécifique. A titre d'exemple, l'expression « environ 20 » comprend les valeurs de 20 $\pm$ 10 %, soit les valeurs de 18 à 22.

Au sens de la présente description, les pourcentages se réfèrent à des pourcentages en masse par rapport à la masse totale de la formulation, sauf indication contraire.

## FIGURES

La **Figure 1** présente un cycle thermique d'élaboration du verre 14 $Na_2O$ - 57 $B_2O_3$ - 29 MnO, selon l'exemple 1.
La **Figure 2** présente les courbes de cyclage galvanostatique du verre de composition 14 $Na_2O$ - 57 $B_2O_3$ - 29 MnO avec un départ en décharge à C/100, entre 1,5 et 4,5 V, en configuration Li-métal.
La **Figure 3** présente les courbes de cyclage galvanostatique du verre de composition 14 $Na_2O$ - 57 $B_2O_3$ - 29 MnO avec un départ en décharge à C/100, entre 1 et 4,3 V, en configuration Na-métal.

## EXEMPLES

### Exemple 1 : Préparation du verre 14 $Na_2O$ - 57 $B_2O_3$ - 29 MnO

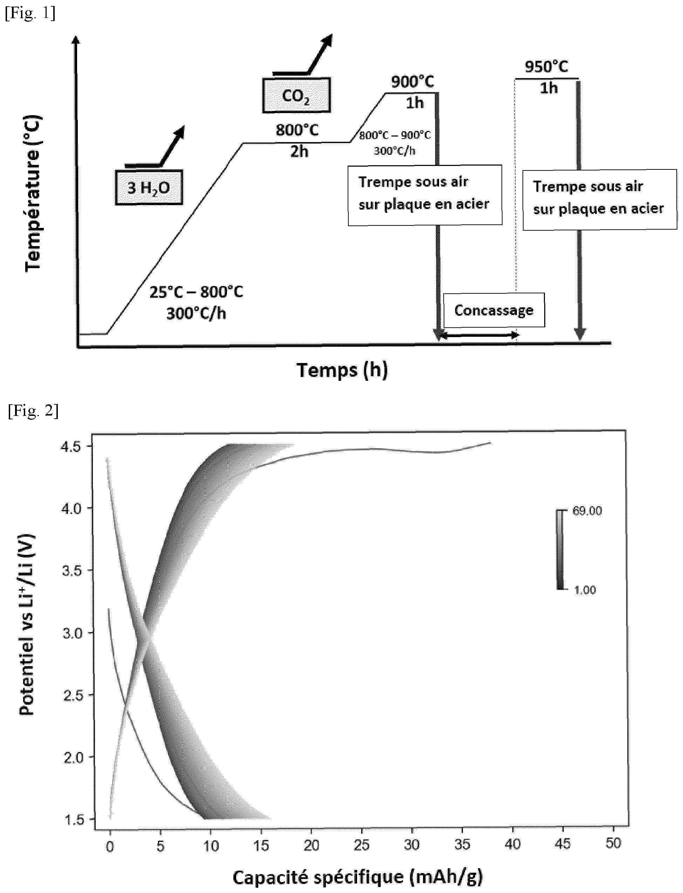

Le verre dans le système 14 $Na_2O$ - 57 $B_2O_3$ - 29 MnO a été élaboré par trempe sous air sur plaque métallique, en particulier en acier inoxydable, à partir d'un bain de fonte. A la suite de la première trempe (**Figure 1**), le matériau est concassé puis rentré à chaud dans le four à 950°C. Le concassage intermédiaire est susceptible de permettre, si nécessaire, d'homogénéiser le matériau.. Le matériau est maintenu 1 heure à cette température avant d'être coulé de nouveau sur une plaque métallique. La proportion molaire visée est obtenue en pesant les différentes poudres de précurseurs ($H_3BO_3$ pour le $B_2O_3$ et MnO pour le MnO et $Na_2CO_3$ pour le $Na_2O$) constituant le mélange.

Ces précurseurs sont ensuite placés dans des creusets en platine rhodié afin d'éviter d'avoir de la diffusion d'éléments parasite comme dans le cas des creusets en alumine (diffusion de l'aluminium).

Le bain de fonte est obtenu en soumettant le mélange de poudres de précurseurs à un traitement thermique (**Figure 1**) permettant l'élimination des espèces chimiques issues des précurseurs ($CO_2$, $H_2O$), en particulier à 800°C pendant 2h pour les moles de $CO_2$.

L'équation de réaction est la suivante :

$$Na_2CO_3 + 2(H_3BO_3) + MnO \rightarrow Na_2O + [CO_2] + [3\ H_2O] + B_2O_3 + MnO.$$

Le matériau brut (sans traitement thermique ultérieur tel qu'un recuit de stabilisation) est alors analysé pour déterminer sa composition chimique réelle, son caractère amorphe ou non ainsi que son homogénéité microstructurale et élémentaire.

Dans un premier temps, des analyses par Spectroscopie d'Emission Atomique à Plasma à Couplage Inductif (ICP-AES) ainsi que des mesures par Spectroscopie des rayons X à dispersion d'énergie (EDX) ont permis de déterminer la composition réelle de l'échantillon.

Le caractère amorphe du matériau a été vérifié et confirmé par Diffraction des Rayons X sur poudre.

Dans un premier temps, l'homogénéité microstructurale du verre a été confirmée par Microscopie Electronique à balayage (MEB) par l'acquisition d'images en électrons retrodiffusés à partir d'une section polie du matériau brut. Par couplage avec un détecteur de Spectroscopie des rayons X à dispersion d'énergie (EDX), il a été possible de réaliser des pointés permettant de quantifier les éléments présents dans l'échantillon, confirmant la composition chimique.

Des cartographies de la distribution élémentaire ont ensuite été obtenues permettant ainsi de vérifier et confirmer l'homogénéité de la distribution des éléments au sein de l'échantillon.

Le verre est ensuite broyé 3min à 30Hz via un vibro-broyeur (Retsch MM400) afin d'être mis en forme en pile-bouton pour être caractérisé électrochimiquement.

**Exemple 2 : Caractérisations Electrochimiques des verres de l'invention**

o Préparation des électrodes

Dans un premier temps, un mélange intime de matériau actif/noir de carbone (Super P) dans les proportions massiques 70/25 a été préparé en utilisant un broyeur énergétique (broyeur planétaire PM100) en voie sèche. Le protocole de broyage dure au total 6h à 300 rpm, en alternant 5 min de broyage et 5 min de repos (afin d'éviter les échauffements locaux pouvant amener à une potentielle dévitrification/cristallisation), soit 3h de broyage effectif. Ensuite, la poudre issue du broyage est caractérisée par diffraction des rayons X pour s'assurer de la maintenue du caractère amorphe du mélange verre/carbone.

La poudre de verre/carbone (i.e. matériau composite) obtenue est ensuite mélangée avec 5% massique de liant polymère (solution de 10% massique de Polyfluorure de Vinylidène (PVDF) diluée dans de la N-Méthyl-2-Pyrrolidone (NMP)). Un solvant (NMP) est par la suite rajouté afin d'obtenir une encre homogène de viscosité acceptable en vue d'être enduite. Cette encre, constituée d'une dispersion de particules de composite dans du PVDF et de la NMP est agitée mécaniquement (pendant 15 minutes à 1000 rotations par minutes) à l'aide d'un disperseur mécanique (Dispermat). Ce dernier permet notamment d'homogénéiser la dispersion et de disperser les agrégats de composites formés lors de l'étape de broyage. L'encre est ensuite enduite par la méthode « doctor blade » (table d'enduction avec râcle de fente réglée à 100 $\mu$m) sur une feuille d'aluminium, puis séchée pendant 24 heures à 60°C sous air pour éliminer le solvant résiduel (la NMP).

Après séchage, l'électrode obtenue est découpée en disques de 14 mm de diamètre, qui sont ensuite calendrés sous une pression de 10 tonnes. La masse des pastilles et leur épaisseur ont été mesurées. Les pastilles sont ensuite séchées sous vide pendant 48h à 80°C afin d'éliminer l'eau résiduelle. Enfin, les électrodes sont transférées en boite à gants ([$H_2O$] < 1 ppm, [$O_2$] < 1ppm), afin d'être montées en pile boutons.

o Réalisation des piles boutons

Les électrodes sont montées en configuration dite demi-pile bouton (format de type CR2032), en boite à gant, en configuration Li-métal ou Na-métal ou K-métal. Les électrodes sont disposées, dans un couvercle (un grand capot), à l'intérieur duquel un joint d'isolation est apposé. Deux séparateurs sont ajoutés sur l'électrode à tester : un feutre Viledon servant de réservoir d'électrolyte, et un séparateur microporeux Celgard prévenant les croissances dendritiques de sodium. Dans le cas d'une pile K-ion, un seul séparateur, le Whatmann, a été utilisé. Un volume de 150 μL d'électrolyte est ajouté à la propipette. Ensuite, la contre-électrode, une feuille de métal (Li, Na ou K) déposée sur une cale en acier inoxydable, est déposée au-dessus des séparateurs. Un ressort est déposé sur la contre-électrode, puis la demi-pile bouton est fermée avec un petit couvercle (ou capot) et sertie.

Selon la configuration, les trois électrolytes utilisés sont les suivants:

- Li-métal :              1M de LiPF6 dans EC:DMC:EMC (1:1:1 vol.)
- Na-métal :           1M de NaPF6 dans EC:DMC (50%vol.:50%vol.) + 2%mass. de FEC
- K-métal :             0.7M de KPF6 dans EC:DEC (50%vol.:50%vol.) + 2%mass. de VC

Avec :

- EC : carbonate d'éthylène
- DMC : carbonate de diméthyle
- EMC : carbonate d'éthyle méthyle
- DEC : carbonate de diéthyle
- FEC : Fluoro carbonate d'éthylène
- VC : carbonate de vinylène

◦ Cyclages galvanostatiques

Les performances de la pile ainsi obtenue sont évaluées avec un banc de test de type ARBIN. Les piles sont typiquement cyclées au régime de C/100, à température ambiante, avec une fenêtre de potentiel entre *1,0 V et 4,3 V ou 1,5 et 4,5 V.*

◦ Exemples de courbes de cyclage galvanosatique

L'accumulateur est initialement mis en configuration de décharge afin d'insérer du lithium au sein de la structure du verre. Un test en cyclage galvanostatique avec un départ en décharge avec une borne en potentiel de 1,5 V vs Li+/Li.
La **Figure 2** présente un exemple de courbes de cyclage galvanosatique.
En outre, l'accumulateur est initialement mis en configuration de décharge afin d'insérer du sodium au sein de la structure du verre. Un test en cyclage galvanostatique avec un départ en décharge avec une borne en potentiel de 1,0 V vs Na+/Na.

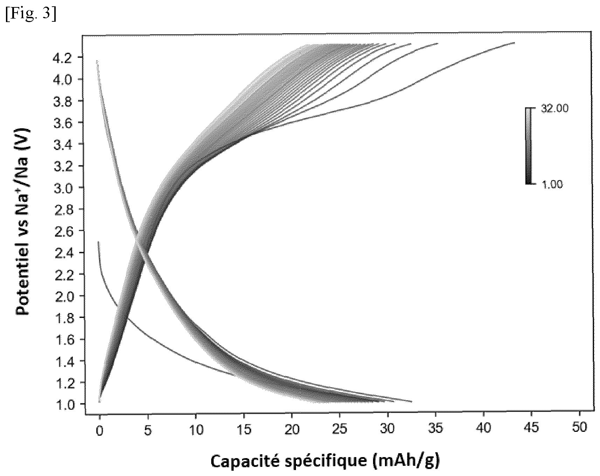

La **Figure 3** présente un exemple de courbes de cyclage galvanosatique.

**Revendications**

1. Verre de formule (I) suivante :

$$x \, Na_2O - y \, MnO_z - (100-x-y) \, B_2O_3 \qquad (I),$$

avec :

$$0 < x < 100$$

$$5 \leq y < 100$$

$$5 < x+y < 100$$

$$1 \leq z \leq 2.$$

2. Verre selon la revendication 1, dans lequel :
x+y < 95, voire 90, 80, 70, 60 ou 50, le verre étant par exemple la formule suivante :

- 14 Na$_2$O - 29 MnO$_z$- 57 B$_2$O$_3$, dans laquelle z est tel que défini précédemment, z étant notamment égal à 2.

3. Procédé de préparation d'un verre selon la revendication 1 ou 2, comprenant une étape (i) de trempe d'un mélange (A) en fusion, lequel est constitué de ou comprend une source de Na$_2$O, une source de MnO$_z$ et une source de B$_2$O$_3$, pour obtenir ledit verre.

4. Procédé selon la revendication 3, comprenant :

- une étape (i) de trempe d'un mélange en fusion (A), lequel est constitué de ou comprend une source de Na$_2$O, une source de MnO$_z$ et une source de B$_2$O$_3$, pour obtenir un verre intermédiaire ;
- une étape (ii) de concassage du verre intermédiaire obtenu à l'issue de l'étape (i) ;
- une étape (iii) de trempe du verre intermédiaire concassé obtenu à l'issue de l'étape (ii), préalablement en fusion, pour obtenir le verre selon la revendication 1 ou 2;

ou dans lequel l'étape (i) telle que décrite dans la revendication 3 est précédée d'une étape d'agitation du mélange (A).

5. Procédé selon l'une quelconque des revendications 3 à 4, dans lequel :

- la source de Na$_2$O comprend ou est constitué de Na$_2$CO$_3$, NaPO$_3$, Na(OH) et/ou NaNO$_3$, notamment Na$_2$CO$_3$,
- la source de MnO$_z$ comprend ou est constitué de MnO et/ou MnO$_2$, Mn$_2$O$_3$, Mn(CO$_3$), Mn(SO$_4$), ou Mn(OH)$_2$, notamment MnO et/ou MnO$_2$;
- la source de B$_2$O$_3$ comprend ou est constitué de H$_3$BO$_3$.

6. Poudre constituée de ou comprenant des particules de verre tel que défini dans l'une quelconque des revendications 1 à 2, dans laquelle les particules ont notamment une taille comprise de 0,1 à 100 $\mu$m, en particulier de 0,1 à 50 $\mu$m.

7. Poudre selon la revendication 6, comprenant en outre un additif conducteur électronique, en particulier des particules de carbone, et optionnellement, un liant.

8. Electrode, en particulier positive, notamment pour une pile ou un accumulateur métal-ion, comprenant un verre selon la revendication 1 ou 2 ou une poudre selon la revendication 6 ou 7.

9. Procédé de préparation d'une électrode, en particulier positive, notamment pour une pile ou un accumulateur métal-ion, ledit procédé comprenant une étape A) de mise en contact d'une poudre constituée de ou comprenant des particules de verre, un additif conducteur électronique, en particulier des particules de carbone, et optionnellement un liant, selon l'une des revendications 6 à 7, avec un support conducteur.

10. Pile ou accumulateur comprenant une électrode, en particulier positive, comprenant un verre selon la revendication 1 ou 2 ou une poudre selon la revendication 6 ou 7, ayant notamment une capacité théorique supérieure à 80 mAh/g.

11. Batterie comprenant au moins une pile ou au moins un accumulateur selon la revendication 10.

12. Système électroportatif ou adapté à la mobilité électrique, comprenant une batterie selon la revendication 11.

[Fig. 1]

[Fig. 2]

[Fig. 3]

Europäisches
Patentamt

European
Patent Office

Office européen
des brevets

# RAPPORT DE RECHERCHE EUROPEENNE

**Numéro de la demande**

EP 25 19 3055

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 3 619 218 A (HAGEDORN ERWIN C ET AL) 9 novembre 1971 (1971-11-09) * exemples; tableaux * ----- | 1-6 | INV. C03C3/14 C03C12/00 C03C14/00 |
| A | US 2018/183044 A1 (YAMAUCHI HIDEO [JP]) 28 juin 2018 (2018-06-28) * alinéas [0001] - [0023], [0061] - [0063], [0129], [0130]; revendications; exemples; tableaux * ----- | 1-12 | H01M4/00 |

**DOMAINES TECHNIQUES RECHERCHES (IPC)**

C03C
H01M

Le présent rapport a été établi pour toutes les revendications

| Lieu de la recherche | Date d'achèvement de la recherche | Examinateur |
|---|---|---|
| Munich | 27 novembre 2025 | Wrba, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 19 3055

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-11-2025

| Document brevet cité au rapport de recherche | | Date de publication | Membre(s) de la famille de brevet(s) | | Date de publication |
|---|---|---|---|---|---|
| US  3619218 | A | 09-11-1971 | US | 3561985 A | 09-02-1971 |
| | | | US | 3619218 A | 09-11-1971 |
| US  2018183044 | A1 | 28-06-2018 | CN | 108352530 A | 31-07-2018 |
| | | | CN | 115832288 A | 21-03-2023 |
| | | | JP | 7075760 B2 | 26-05-2022 |
| | | | JP | WO2017073457 A1 | 16-08-2018 |
| | | | US | 2018183044 A1 | 28-06-2018 |
| | | | WO | 2017073457 A1 | 04-05-2017 |

EPO FORM P0460

Pour tout renseignement concernant cette annexe : voir Journal Officiel de l'Office européen des brevets, No.12/82